# EUROPÄISCHE PATENTANMELDUNG

(11) **EP 2 615 367 A1**
(43) Veröffentlichungstag der Anmeldung: **17.07.2013**
(21) Anmeldenummer: 13000126.6
(22) Anmeldetag: 10.01.2013
(51) Int. Cl.: F21V 5/00, F21V 5/04, F21V 5/08, G02B 3/00, F21Y 101/02, F21W 131/103

(54) **Leuchte**

(30) Priorität: 11.01.2012 DE 102012000388
(71) Anmelder: Bartenbach Holding GmbH, 6071 Aldrans (AT)
(72) Erfinder: Bartenbach, Christian, 6071 Aldrans (AT)
(74) Vertreter: Thoma, Michael

(57) **Zusammenfassung**

Die vorliegende Erfindung betrifft eine Leuchte mit zumindest einer Linse (4), die zumindest zwei Lichteintrittsflächen (8) für zumindest zwei der Linse (4) zugeordnete Lichtquellen (7) sowie eine Lichtaustrittsfläche (5) umfasst. Erfindungsgemäß sind die Lichteintrittsflächen (8) der Linse (4), die den verschiedenen Lichtquellen (7) zugeordnet sind, jeweils asymmetrisch ausgebildet und mit der gemeinsamen Lichtaustrittsfläche (5) derart abgestimmt, dass von den Lichtquellen (7) erzeugte, von der Linse (4) geformte Lichtabgabe-Strahlenbündel im bestimmungsgemäß auszuleuchtenden Raumbereich einander überdecken und zueinander im Wesentlichen identische Lichtstärkeverteilungen besitzen.

## Beschreibung

Die vorliegende Erfindung betrifft eine Leuchte mit zumindest einer Linse, die zumindest zwei Lichteintrittsflächen für zumindest zwei der Linse zugeordnete Lichtquellen sowie eine Lichtaustrittsfläche umfasst.

Bei modernen Leuchtensystemen besteht generell der Wunsch, das jeweils abgestrahlte Licht variabel an die jeweilige Beleuchtungssituation und deren Randbedingungen anpassen zu können, was sich beispielsweise in variierenden Farbtemperaturen, variierenden Lichtstärkeverteilungen oder unterschiedlichen Lichtdurchmischungen niederschlagen kann. Werden hierbei mehrere punktförmige Lichtquellen beispielsweise in Form von LEDs in einer mehr oder minder gleichmäßigen, beispielsweise reihen- oder matritzenförmigen Anordnung verwendet, ist es wünschenswert, die durch die Anordnung der Lichtquellen vorgegebene Gleichmäßigkeit der Leuchtenanordnung beizubehalten, auch wenn verschiedene Beleuchtungsaufgaben erfüllt werden sollen. Um beispielsweise trotz gleichmäßiger, matritzenförmiger Lichtquellenanordnung unterschiedliche Raumbereiche verschieden stark zu beleuchten, können den Lichtquellen Linsen vorgeschaltet werden, um die Lichtausbreitung der jeweiligen Lichtquellen entsprechend zu steuern. Da jedoch die gewünschte Lichtverteilung die Formgebung der Linse beeinflusst, ist es nicht ganz einfach, bei verschiedenen Lichtverteilungscharakteristiken dennoch ein gleichmäßiges Erscheinungsbild beibehalten zu können.

Andererseits wird beispielsweise bei Straßen- und Außenbeleuchtungen generell bei einer guten visuellen Erkennbarkeit von Straßen- und Umgebungskonturen sowie Hindernissen und Fahrzeugen insbesondere auch eine Blendungsfreiheit angestrebt. Einerseits sind natürlich hohe Leuchtdichten auf der Fahrbahn oder unmittelbar über dem Boden bzw. hohe Lichtströme der Lichtquellen erwünscht, um eine gute Erkennbarkeit von Hindernissen und Bodenkonturen zu erreichen. Andererseits sind für eine gute Erkennbarkeit und eine ermüdungsfreie Wahrnehmbarkeit nicht nur hohe Leuchtdichten bzw. hohe Lichtströme und damit ausreichende Helligkeiten förderlich, sondern auch eine Gleichmäßigkeit der Lichtverteilung und das Vermeiden von Hell-Dunkel-Veränderungen gewünscht, um mit dem Auge entspannt einen größeren Bereich stabil wahrnehmen zu können und auch für fahrende Beobachter keine instabilen Wahrnehmungsverhältnisse zu schaffen.

In jüngerer Zeit werden auch hierfür bisweilen punktförmige Lichtquellen beispielsweise in Form von LEDs verwendet, denen Linsen vorgeschaltet werden, um das Lichtstrahlenbündel in der gewünschten Weise formen zu können. Hierbei können asymmetrische Freiformlinsen hilfreich sein, um unabhängig vom Aufstellungsort der Leuchte durch eine asymmetrische Lichtstärkeverteilung im bestimmungsgemäß auszuleuchtenden Raumbereich die gewünschte Lichtstärkeverteilung zu erreichen.

Ein Problem bei derartigen Leuchtensystemen mit mehreren LEDs ist jedoch der Ausfall einzelner Lichtquellen, der das Zusammenspiel der oftmals in Reihe nebeneinander angeordneten Leuchten bzw. Lichtquellen zerstört und eine stabile Wahrnehmung beeinträchtigen kann.

Aus der Schrift EP 2 135 005 B1 ist eine Straßenleuchte bekannt, die als Lichtquellen LEDs besitzt und vor den Lichtquellen Linsen vorsieht, um den an sich von den Lichtquellen abgestrahlten rotationssymmetrischen Lichtkegel in ein längliches Strahlenbündel umzuformen, welches dem schmalen, länglichen Verlauf einer Straße angepasst ist. Die Linse besitzt hierbei eine kugelschalenförmige Lichteintrittsfläche, während die Lichtaustrittsfläche aus konkaven und konvexen Segmenten zusammengesetzt ist derart, dass unmittelbar über der sphärischen Lichteintrittsfläche ein konkaves Lichtaustrittsflächensegment bzw. eine Einschnürung liegt, an die sich rechts und links anschließend rotationssymmetrische Höcker anschließen, so dass eine insgesamt betrachtet kamelhöckerförmige Lichtaustrittsfläche verwendet wird, die bezüglich zweier zueinander senkrechter Ebenen symmetrisch ist. Dabei wird vorgeschlagen, einer Linse zwei punktförmige Lichtquellen zuzuordnen, deren Licht über zwei sphärische Lichteintrittsflächen in die Linse eingekoppelt und über eine dreihöckerige Lichtaustrittsfläche wieder abgegeben wird, wobei die Lichtkegel, die von den einzelnen Lichtquellen erzeugt werden, zu gegenüberliegenden Seiten hin abgestrahlt werden, um ein möglichst langes Flächenstück einer Straße zu beleuchten.

Bei dieser vorbekannten Leuchte ergibt sich jedoch das vorgenannte Problem, dass bei Ausfall einer Lichtquelle eine ungleichmäßige Lichtverteilung entstehen kann, die eine stabile Wahrnehmung beeinträchtigt. Zum anderen erhält die Leuchte in ihrer Gesamtheit, die üblicherweise eine Vielzahl von rasterförmig angeordneten Linsen umfassen kann, ein insgesamt ungleichmäßiges Erscheinungsbild, da verschiedene Linsen mit verschiedenen Lichtaustrittsflächen verwendet werden, um in verschiedenen Bereichen des auszuleuchtenden Raumes die jeweils gewünschten Lichtverteilungen erzielen zu können.

Aus der WO 2011/154470 A1 ist ein Kraftfahrzeug-Scheinwerfer bekannt, dessen Vorsatzoptik ein Linsen-Array umfaßt, das vor mehreren LEDs angeordnet ist. Das Linsen-Array umfaßt dabei eine der LED-Anzahl entsprechende Linsen-Anzahl, so daß jeder LED ihre eigene Linse zugeordnet ist, wobei diese Einzellinsen durch Glasbrücken verbunden sein können, um das Linsen-Array einteilig zu machen. Diese Glasbrücken sollen jedoch keine optisch wirksame Eigenschaft haben, so daß die Linsen des Linsen-Arrays funktional getrennt bleiben. Die hierdurch erzeugten Strahlenbündel können einander überlappen, sollen jedoch Einzellichtverteilungen mit zueinander versetzten Schwerpunkten bilden. Durch diese divergierenden bzw. voneinander abweichenden Lichtverteilungen der Einzelstrahlbündel bleibt es jedoch bei dem Problem, daß bei Ausfall einer Lichtquelle eine ungleichmäßige Lichtverteilung entsteht, die eine stabile Wahrnehmung beeinträchtigt. Zum anderen erhält die Leuchte in ihrer Gesamtheit durch die Vielzahl von separaten rasterförmig angeordneten Linsen ein insgesamt ungleichmäßiges Erscheinungsbild, das durch die Vielzahl der separaten Lichtaustrittsflächen unruhig wirkt.

Der vorliegenden Erfindung liegt die Aufgabe zugrunde, eine verbesserte Leuchte der genannten Art zu schaffen, die Nachteile des Standes der Technik vermeidet und Letzteren in vorteilhafter Weise weiterbildet. Insbesondere soll eine stabilere Wahrnehmung auch bei Ausfall einzelner Lichtquellen erreicht werden. Weiterhin wäre es wünschenswert, bei Verwendung mehrerer oder einer Vielzahl von Lichtquellen eine bessere Licht- und Farbmischung erreichen und trotz unterschiedlicher Lichtverteilungsanforderungen für verschiedene Lichtquellen ein einheitliches Erscheinungsbild der Leuchte erzielen zu können.

Erfindungsgemäß wird die genannte Aufgabe durch eine Leuchte gemäß Anspruch 1 gelöst. Bevorzugte Ausgestaltungen der Erfindung sind Gegenstand der abhängigen Ansprüche.

Die vorliegende Erfindung schlägt vor, die von mehreren Lichtquellen abgegebenen Lichtstrahlenbündel durch eine gemeinsame Linse zu formen und dabei die Linse so auszubilden, dass die sich im auszuleuchtenden Raumbereich überdeckenden Lichtstrahlenbündel der verschiedenen Lichtquellen zumindest näherungsweise dieselbe Lichtstärkeverteilung besitzen, so dass unabhängig von der jeweils eingeschalteten Lichtquelle, d.h. unabhängig davon, ob die eine oder die andere Lichtquelle oder beide Lichtquellen eingeschaltet sind, in dem von der gemeinsamen Linse bestimmungsgemäß ausgeleuchteten Raumbereich zu einer gleich bleibenden Lichtstärkeverteilung kommt. Erfindungsgemäß sind die Lichteintrittsflächen der Linse, die den verschiedenen Lichtquellen zugeordnet sind, jeweils asymmetrisch ausgebildet und mit der gemeinsamen Lichtaustrittsfläche derart abgestimmt, dass von den Lichtquellen erzeugte, von der Linse geformte Lichtabgabe-Strahlenbündel im bestimmungsgemäß auszuleuchtenden Raumbereich nicht nur einander überdecken, sondern auch zueinander im Wesentlichen identische Lichtstärkeverteilungen besitzen. Insbesondere sieht die gemeinsame Linse im auszuleuchtenden Raumbereich nicht nur punktuell gleiche Lichtstärken vor, sondern es sind die Lichtstärkeverteilungen der Lichtstrahlenbündel im auszuleuchtenden Fernbereich über einen größeren Raum- bzw. Flächenbereich, insbesondere über nahezu die gesamte beleuchtete Fläche, vielleicht mit Ausnahme von Randbereichen, nahezu identisch und kongruent, d.h. sie zeigen auch keinen Versatz voneinander. Durch eine solche gleichförmige Überlagerung der Lichtstrahlenbündel der einer gemeinsamen Linse zugeordneten Lichtquellen wird eine Redundanz des Beleuchtungssystems erreicht, das auch bei Ausfall einzelner Lichtquellen eine stabile Wahrnehmbarkeit gewährleistet. Gleichzeitig eröffnet sich die Möglichkeit bei stabil bleibender Wahrnehmbarkeit und gleichmäßigem Erscheinungsbild des Leuchtensystems, atmosphärisches Licht mit besserer, variablerer Licht- und Farbmischung zu erzeugen. Während bei bisherigen Leuchtensystemen mit sich nicht gleichmäßig überdeckenden Lichtstrahlenbündeln unterschiedlicher Lichtstärkeverteilung bei Verwendung verschiedenfarbiger bzw. hinsichtlich der Farbtemperatur und/oder des Spektrums unterschiedlicher Lichtquellen für das Auge wahrnehmbare Farb- bzw. Lichtscheckigkeiten, d.h. hinsichtlich der Farbtemperatur bzw. des Spektrums abwechselnde Beleuchtungsbereiche ergeben, kann mit der erfindungsgemäßen Leuchte auch bei Verwendung von Lichtquellen unterschiedlicherer Farbtemperatur eine gleichmäßig homogene, die gewünschte Farbtemperatur aufweisende Raumausleuchtung erzielt werden.

Während einerseits unabhängig davon, ob die eine oder die andere oder mehrere Lichtquellen eingeschaltet sind, die Lichtverteilungscharakteristik im zu beleuchtenden Raumbereich mehr oder minder konstant bleibt, kann durch Ein- und Ausschalten oder Dimmen einzelner bzw. Zuschalten oder Dimmen anderer Lichtquellen die Farbtemperatur oder die Lichtcharakteristik und auch die Helligkeit variiert werden. Insbesondere können einer Linse auch verschiedene Lichtquellen mit unterschiedlichen Lichtcharakteristika zugeordnet werden, beispielsweise dergestalt, dass zur Beeinflussung des Melatoninspiegels mit unterschiedlichen Lichtquellen Tages- und Nachtbeleuchtungen mit unterschiedlichen Lichtcharakteristika erzeugt werden, wobei trotz Verwendung der verschiedenen Lichtquellen ein einheitliches Erscheinungsbild und gleich bleibende Lichtverteilungen im Raum erzeugt werden können.

In vorteilhafter Weiterbildung der Erfindung können die Lichteintrittsflächen und die gemeinsame Lichtaustrittsfläche derart ausgebildet und aufeinander abgestimmt sein, dass das von einer Linse abgegebene Lichtstrahlenbündel eine insgesamt asymmetrische Lichtstärkeverteilung besitzt, die an die jeweilige Beleuchtungsaufgabe angepasst ist. Beispielsweise kann es bei Tunnelleuchten vorteilhaft sein, die Lichtausbreitung und die Lichtstärkeverteilung durch eine Linse derart zu steuern, dass der Tunnel bzw. die Straße nach dem Mitstrahlprinzip ausgeleuchtet wird, d.h. ein in Fahrtrichtung betrachtet vor der jeweiligen Leuchte liegender Halbraum mehr oder minder abgeblendet wird und nur der in Fahrtrichtung betrachtet hinter der Leuchte liegende Halbraum ausgestrahlt wird. Je nach Verwendung der Leuchte können jedoch auch andere asymmetrische Lichtstärkeverteilungen vorteilhaft sein.

In vorteilhafter Weiterbildung der Erfindung wird die Lichtaustrittsfläche der Linse konstant gehalten und die gewünschte Lichtverteilungscharakteristik durch variierende asymmetrische Konturierungen der Lichteintrittsflächen der Linse gesteuert. Hierdurch kann ein insgesamt einheitliches Erscheinungsbild einer Leuchte erreicht werden, die mehrere Linsen, insbesondere ein linien- oder matrixförmige Linsenanordnung besitzt. Konkret können in einem solchen Fall verschiedene Linsen der Leuchte, denen jeweils zumindest zwei LEDs zugeordnet sein können, dieselbe Lichtaustrittsfläche besitzen, während die Lichteintrittsflächen verschiedener Linsen verschiedene Konturierungen besitzen, um verschiedene Lichtaustrittscharakteristiken zu erreichen. Neben einem einheitlichen Erscheinungsbild kann hierdurch auch noch eine vereinfachte Fertigung erzielt werden, da die Lichtaustrittsfläche gleich bleibt und insofern nur eine Formhälfte, mit der die Lichteintrittsflächen geformt werden, variiert werden muss.

Vorteilhafterweise können sich die mehreren Lichtquellen bzw. die hiervon erzeugten Einzellichtbündel die gemeinsame Lichtaustrittsfläche dergestalt teilen, daß die Einzellichtbündel von sich überdeckenden Flächenstücken der Linse austreten. Die Lichteintrittsflächen können hierbei derart konturiert sein, daß sich die Einzellichtbündel bereits in der Linse überschneiden und von einem gemeisamen Lichtaustrittsflächenstück austreten. Die Überdeckung der Einzellichtbündel auf der gemeinsamen Lichtaustrittsfläche der Linse kann dabei unterschiedlich groß sein, beispielsweise im Sinne eine vollständigen Überdeckung kongruenter Flächenstücke beschaffen sein, wobei die Einzelstrahlenbündel jeweils die volle Lichtaustrittsfläche der Linse nutzen, kann ggf. aber auch nur als Teilüberlappung ausgebildet sein, die jedoch vorzugsweise eine wenigstens 50%, vorzugsweise mehr als 66% Überdeckung der Flächenstücke aufweist. Durch eine großflächige Überdeckung der Einzelstrahlenbündel schon auf der Lichtaustrittsfläche kann ein gleichmäßiges ruhiges Erscheinungsbild der Leuchte auch bei Betrieb nur einzelner oder wechselnder Lichtquellen erreicht werden.

Insbesondere kann in Weiterbildung der Erfindung eine insgesamt kontinuierlich und/oder gleichmäßig konvex gewölbte Lichtaustrittsfläche vorgesehen sein, die insbesondere frei von konkaven Flächenabschnitten ausgebildet sein kann. Insbesondere kann die gesamte Lichtaustrittsfläche der Linse ballig konturiert sein.

In Weiterbildung der Erfindung ist dabei die genannte Lichtaustrittsfläche symmetrisch ausgebildet, insbesondere derart, dass ein höchster Flächenabschnitt der Lichtaustrittsfläche, in dem eine Höhe der Linsenaustrittsfläche über einer Linsenbasis, in der die Lichteintrittsflächen ausgebildet sind, einen Maximalwert annimmt, wobei der genannte höchste Flächenabschnitt bzw. Flächenpunkt mittig auf einer Hauptachse der Linsenaustrittsfläche liegen kann, welche Hauptachse von der Schnittgeraden zweier Symmetrieebenen der Lichtaustrittsfläche gebildet sein kann. Grundsätzlich könnte je nach gewünschter Abstrahlcharakteristik die Linse bzw. die Linsenaustrittsfläche auch nur bezüglich einer Ebene symmetrisch ausgebildet sein. Vorteilhafterweise können jedoch zwei Symmetrien realisiert werden, insbesondere dergestalt, dass die Linsenaustrittsfläche zwei zueinander senkrecht stehende Symmetrieebenen besitzt.

Insbesondere kann in vorteilhafter Weiterbildung der Erfindung die Linsenaustrittsfläche ellipsoid ausgebildet sein, wobei vorzugsweise eine kurze Hauptachse des Ellipsoids, welches von der Lichtaustrittsfläche definiert wird, senkrecht zu der Linsenaustrittsfläche steht, in der die Lichteintrittsflächen ausgebildet sind, während eine lange Hauptachse des genannten Ellipsoids parallel zu der genannten Linsenbasisfläche ausgerichtet sein kann.

Insbesondere kann die Linse im Wesentlichen die Form eines liegenden Halbellipsoids besitzen, das eine ebene Basisfläche besitzt, die eine Halbschnittebene senkrecht zur kurzen Achse des Ellipsoids bildet. In der besagten Basisfläche können die Lichteintrittsflächen in Form asymmetrischer Vertiefungen ausgebildet bzw. eingearbeitet sein.

Die genannten Lichteintrittsflächen, die den verschiedenen Lichtquellen zugeordnet sind, sind vorteilhafterweise selbst jeweils asymmetrisch konturiert, können gleichwohl jedoch symmetrisch bezüglich einer Symmetrieebene der Lichtaustrittsfläche und/oder symmetrisch bezüglich einer Hauptachse der Lichtaustrittsfläche angeordnet sein.

Die vorliegende Erfindung wird nachfolgend anhand eines bevorzugten Ausführungsbeispiels und zugehöriger Zeichnungen näher erläutert. In den Zeichnungen zeigen:
- Fig. 1:: einen Vertikalschnitt durch eine Leuchte nach einer vorteilhaften Ausführung der Erfindung, bei der am oberen Ende eines pfostenförmigen Leuchtenständers ein geneigter Leuchtenträger vorgesehen ist, an dem eine Mehrzahl von Linsen mit zugeordneten Lichtquellen vorgesehen ist, wobei eine der Linsen im Schnitt gezeigt ist,
- Fig. 2:: einen Längsschnitt durch die in Reihe nebeneinander angeordneten Linsen der Leuchte aus Fig. 1,
- Fig. 3:: einen Querschnitt durch eine der Linsen der Leuchte aus Fig. 1, wobei nur eine in der Zeichnung linke Lichtquelle eingeschaltet und deren Strahlengang gezeigt ist,
- Fig. 4:: einen Querschnitt der Linse ähnlich Fig. 3, wobei nur eine andere, in der Zeichnung rechte Lichtquelle eingeschaltet und deren Strahlengang dargestellt ist,
- Fig. 5:: einen Querschnitt der Linse ähnlich den Figuren 3 und 4, wobei beide der Linse zugeordnete Lichtquellen eingeschaltet und deren sich überlagernden Strahlengänge dargestellt sind, und
- Fig. 6:: eine perspektivische Draufsicht auf die Lichteintrittsflächen der Linse.

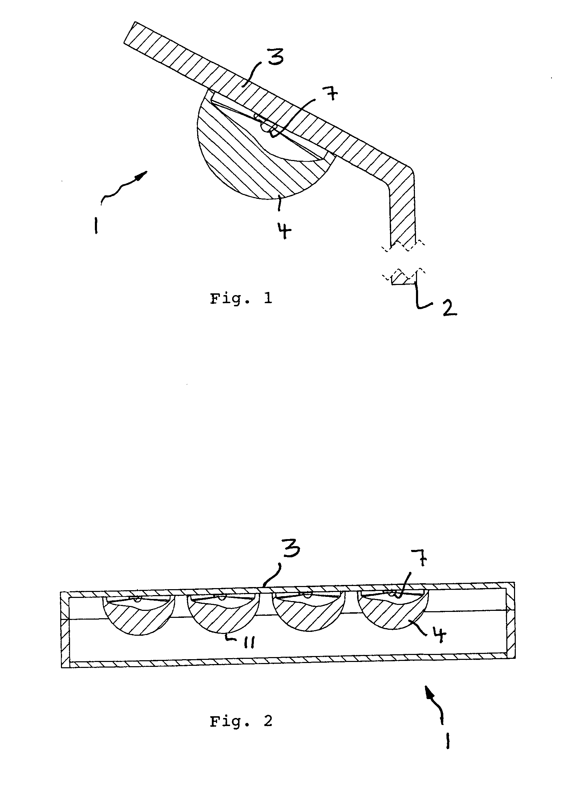

Wie Fig. 1 verdeutlicht, kann die Leuchte 1 als Außen- oder Straßenleuchte ausgebildet sein und der Beleuchtung von Straßen, Wegen bzw. öffentlichen Plätzen dienen, wobei die Leuchte 1 einige Meter hoch über dem Boden angeordnet sein kann. Hierzu kann ein pfostenförmiger Leuchtenständer 2 vorgesehen sein, der an seinem oberen Ende einen gegenüber der Horizontalen und Vertikalen geneigten Leuchtenträger 3 aufweisen kann, der von einem abgekröpften Endabschnitt des Leuchtenständers 2 gebildet sein kann.

An dem genannten Leuchtenträger 3 kann eine linienförmige oder matrixförmige, mehrreihige Anordnung von Linsen 4 vorgesehen sein, deren Lichtaustrittsfläche 5 dem Boden zugewandt sein kann, insbesondere schräg geneigt nach unten blicken kann, um beispielsweise von einem Straßenrand aus in der Höhe des oberen Endes des genannten Leuchtenständers 2 eine Straße zu beleuchten oder auch einen vor dem aufrechten Leuchtenständer 2 befindliches Flächenstück eines Platzes zu beleuchten.

Wie Fig. 2 zeigt, können mehrere Linsen 4 nebeneinander gleichmäßig voneinander beabstandet angeordnet sein, wobei die jeweiligen Linsen 4 mit einer zumindest näherungsweise ebenen Linsenbasisfläche 6 parallel zueinander ausgerichtet sein können, insbesondere an einer Montagefläche des Leuchtenträgers 3 befestigt sein können.

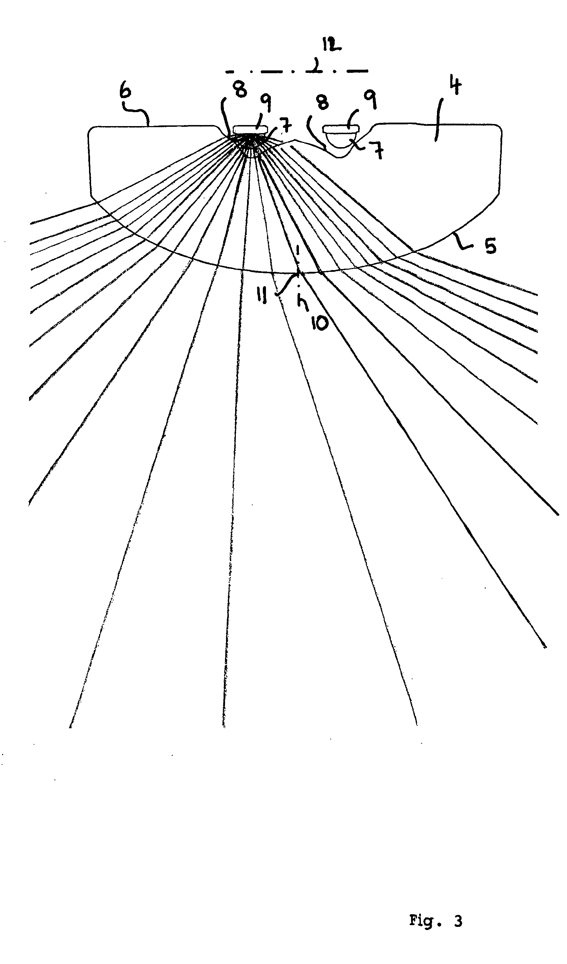

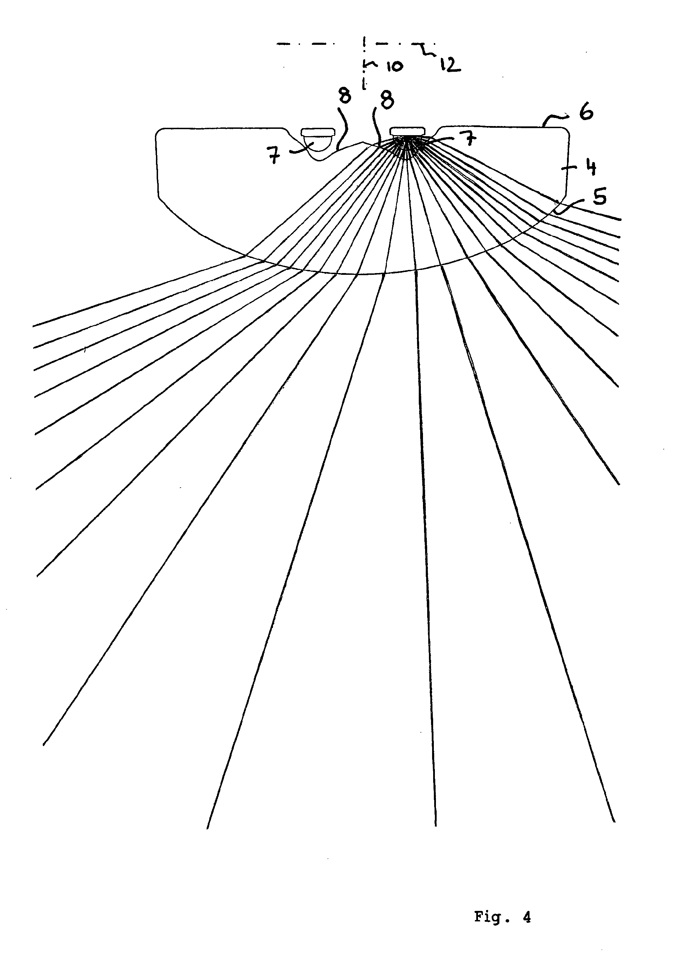

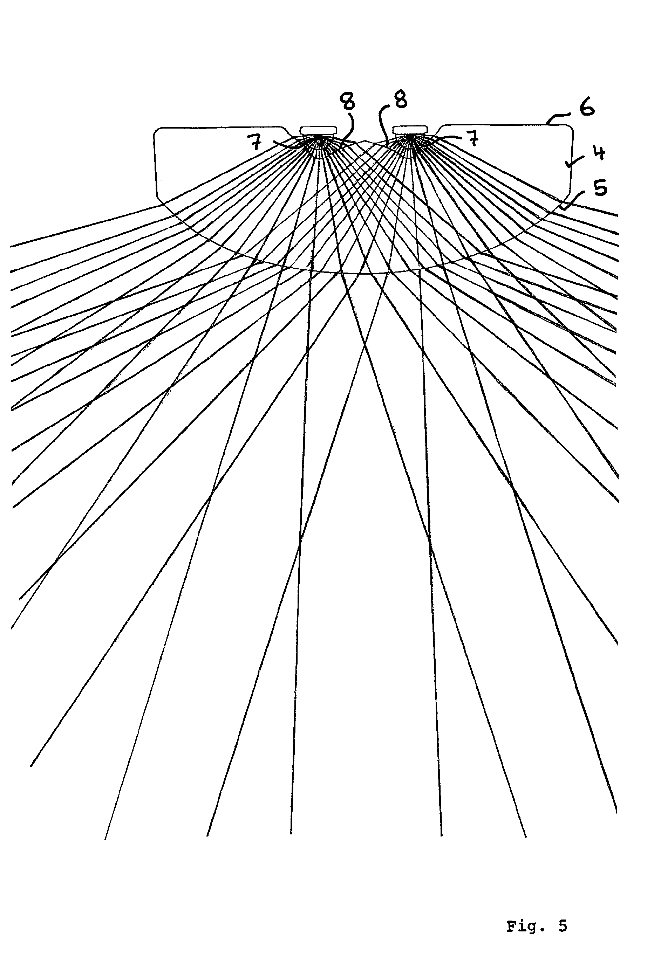

Wie die Figuren 3 bis 5 zeigen, sind dabei jeder der Linsen 4 jeweils zumindest zwei Lichtquellen 7 zugeordnet, die als punktförmige Lichtquellen und insbesondere als LEDs ausgebildet sein können. Um das von den Lichtquellen 7 abgegebene Licht im Wesentlichen vollständig einzufangen, sind in der Basisfläche 6 einer jeweiligen Linse 4 jeweils zwei Lichteintrittsflächen 8 ausgebildet, die - grob gesprochen - senkenförmigen Ausnehmungen in der Linsenbasisfläche 6 bilden, so dass die Lichtquellen 7 zumindest teilweise versenkt in den Linsen 4 angeordnet werden können und das Licht der Lichtquellen 7, die halbraumförmig abstrahlen können, im Wesentlichen vollständig in die umgebende Linsenkontur eingekoppelt werden kann. Insbesondere können die Lichtquellen 7 auf einem plattenförmigen Versorgungsbaustein 9 sitzen, der bündig mit der von der Linsenbasisfläche 6 definierten Ebene angeordnet sein kann, so dass die Lichtquellen 7 zusammen mit der jeweiligen Linse 4 auf der Montagefläche des Linsenträgers 3 bzw. einer zwischengeschalteten Gehäuseplatte befestigt werden können.

Wie ein Vergleich der Figuren 2 und 3 zeigt, ist die Lichtaustrittsfläche 5 ellipsoid konturiert. Alternativ oder zusätzlich zu einer solchen ellipsoiden Konturierung kann die Lichtaustrittsfläche 5 symmetrisch, insbesondere rotationssymmetrisch bezüglich einer Achse ausgebildet sein, welche parallel zu der Linsenbasisfläche 6 ausgerichtet ist und/oder parallel zu einer Verbindungsgeraden der beiden Lichtquellen 7 ausgerichtet sein kann. Alternativ oder zusätzlich zu einer solchen Rotationssymmetrie kann die Lichtaustrittsfläche 5 symmetrisch bezüglich zweier Symmetrieebenen ausgebildet sein, die zueinander senkrecht stehen, wobei vorteilhafterweise eine der beiden Symmetrieebenen durch die Lichtquellen 7 geht und senkrecht auf die Linsenbasisfläche 6 steht, während eine zweite Symmetrieebene zwischen den beiden Lichtquellen 7 verlaufen kann und ebenfalls senkrecht auf die genannte Linsenbasisfläche 6 steht. Die genannten beiden Symmetrieebenen bilden einerseits die Zeichenebene der Fig. 3 und andererseits eine Ebene parallel zur Zeichenebene der Fig. 2. Die zweitgenannte Symmetrieebene kann senkrecht zur Zeichenebene der Fig. 3 durch die dort eingetragene Achse 10 verlaufen.

Alternativ oder zusätzlich zu den genannten Symmetrien, insbesondere bei ellipsoider Konturierung der Lichtaustrittsfläche 5, kann die Lichtaustrittsfläche 5 eine Hauptachse 10 besitzen, die vorteilhafterweise im Wesentlichen senkrecht auf die Linsenbasisfläche 6 stehen kann und/oder mittig zwischen den Lichtquellen 7 angeordnet sein kann und/oder sich durch den höchsten Flächenpunkt der Lichtaustrittsfläche 5 erstrecken kann, indem die Höhe der Linse 4 über der Linsenbasisfläche 6, senkrecht zu besagter Linsenbasisfläche 6 gemessen, einen Maximalwert annimmt. Der genannte höchste Flächenpunkt ist in Figuren 2 und 3 mit der Bezugsziffer 11 gekennzeichnet.

Bei ellipsoider Ausbildung der Lichtaustrittsfläche 5 kann die kurze Hauptachse des Ellipsoids durch den genannten höchsten Flächenpunkt 11 der Lichtaustrittsfläche 5 gehen und/oder senkrecht auf die Linsenbasisfläche 6 stehen, während sich die lange Hauptachse des Ellipsoids parallel zur Linsenbasisfläche 6 und/oder parallel zu einer Verbindungsgeraden durch die Lichtquellen 7 erstreckt.

Im Gegensatz zu der symmetrisch konturierten, kontinuierlich ballig gewölbten Lichtaustrittsfläche 5 sind die beiden Lichteintrittsflächen 8 asymmetrisch konturiert und derart geformt, dass im Zusammenspiel mit der Lichtaustrittsfläche 5 die Lichtstrahlenbündel der beiden Lichtquellen 7 sich außerhalb der Linse 4 im bestimmungsgemäß auszuleuchtenden Raumbereich gleichförmig überlagern und dort die näherungsweise identischen Lichtstärkeverteilungen erzeugen. Im unmittelbaren Nahbereich der Linsenaustrittsfläche 5 können die von den Lichtstrahlenbündeln der Lichtquellen 7 erzeugten Lichtstärkeverteilungen noch mehr oder wenig geringfügig voneinander abweichen, wobei sich diese Abweichungen allerdings bis zum bestimmungsgemäß zu beleuchtenden Bereich verlieren. Der genannte bestimmungsgemäß beleuchtete Raumbereich kann je nach Beleuchtungsaufgabe variieren, liegt aber im Regelfall 1 bis 15 m, insbesondere etwa 2 bis 10 m von der jeweiligen Linse 4 beabstandet. Wird die Leuchte 1 als Außen- bzw. Straßenleuchte eingesetzt, liegt der bestimmungsgemäß auszuleuchtende Raumbereich etwa 0 bis 2 m über der Bodenoberfläche. In diesem bestimmungsgemäß auszuleuchtenden Raumbereich erzeugen die von der Linse 4 geformten Lichtstrahlenbündel der mehreren Lichtquellen 7, die einer Linse 4 zugeordnet sind, im Wesentlichen die gleichen Lichtstärkeverteilungen, so dass sich die von einer Linse erzeugte Lichtstärkeverteilung nicht oder nur kaum ändert, wenn eine der beiden Lichtquellen 7 ausfällt.

Hält man in ausreichendem Abstand von der Linse - beispielsweise im von der Leuchte bestimmungsgemäß auszuleuchtenden Abstandsbereich, insbesondere im sogenannten Fernfeld der Leuchte, das bei etwa dem 5-fachen oder 10-fachen des Leuchten- oder Linsendurchmessers beginnen kann - eine beispielsweise ebene Fläche senkrecht zur Hauptstrahlrichtung in den Lichtkegel der Leuchte 1, kann unabhängig davon, welche und wie viele Lichtquellen 7 eingeschaltet sind, auf der Fläche immer dasselbe Flächenstück erhellt bzw. bestrahlt werden, wobei über dieses Flächenstück die Helligkeiten bzw. die Lichtstärken immer gleich verteilt sind. Lediglich das Helligkeitsniveau bzw. Lichtstärkeniveau und die Farbtemperatur variiert je nach eingeschalteter Lichtquelle bzw. je nach Anzahl der eingeschalteten Lichtquellen und deren Beschaffenheit. Entsprechend gleichbleibende Lichtverteilungen unabhängig von der oder den jeweils eingeschalteten Lichtquellen zeigen sich dabei auch auf nicht ebenen Flächen, welche mit genanntem Mindestabstand von der Linse in den Licht- bzw. Strahlungsbereich der Leuchte gehalten werden. Das Zusammenspiel der Lichteintrittsflächen mit der gemeinsamen Lichtaustrittsfläche der Linse erzeugt für die von den mehreren Lichtquellen her kommenden Strahlenbündel diese im wesentlichen identischen Lichtverteilungen.

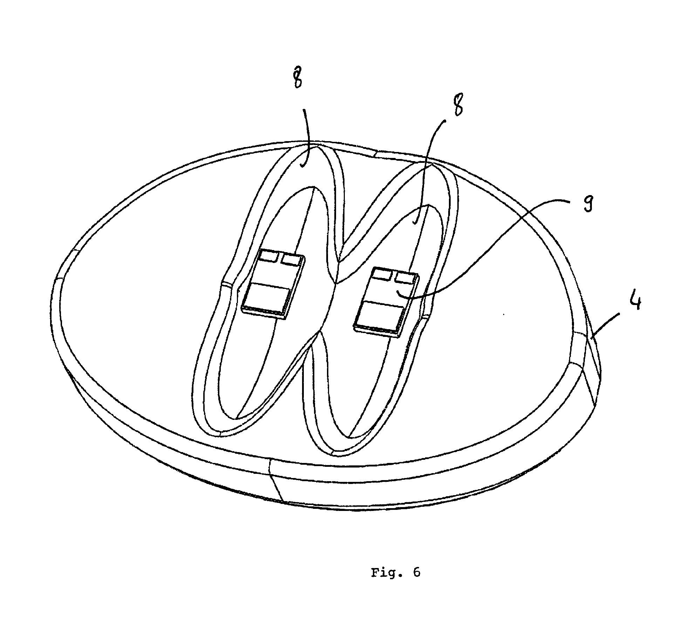

Wie ein Vergleich der Figuren 2, 3 und 6 zeigt, können die Lichteintrittsflächen 6 jeweils asymmetrisch konturiert sein, wobei längliche, schmal konturierte Vertiefungen als Lichteintrittsflächen vorgesehen sein können, deren Längsachsen sich quer zur langen Hauptachse der ellipsoiden Lichtaustrittsfläche 5 erstrecken können, vgl. Fig. 6. Ungeachtet der individuell asymmetrischen Ausbildung der jeweiligen Lichteintrittsfläche 8 können die Lichteintrittsflächen 8 einer Linse 4 bezüglich einer Symmetrieebene der Lichtaustrittsfläche 5 symmetrisch angeordnet sein, vgl. Fig. 6.

## Patentansprüche

1. Leuchte umfassend zumindest eine Linse (4), die zumindest zwei Lichteintrittsflächen (8) für zumindest zwei der Linse (4) zugeordnete Lichtquellen (7) sowie eine Lichtaustrittsfläche (5) umfasst, **dadurch gekennzeichnet, dass** die Lichteintrittsflächen (8) jeweils asymmetrisch ausgebildet und mit der für beide Lichtquellen (7) gemeinsamen Lichtaustrittsfläche (5) derart abgestimmt sind, dass von den zumindest zwei Lichtquellen (7) erzeugte, von der Linse (4) geformte Lichtabgabe-Strahlenbündel im bestimmungsgemäß auszuleuchtenden Raumbereich einander überdecken und zueinander im Wesentlichen identische Lichtverteilungen besitzen.

2. Leuchte nach dem vorhergehenden Anspruch, wobei die Lichteintrittsflächen (8) und die Lichtaustrittsfläche (5) derart ausgebildet sind, dass die Lichtabgabe-Strahlenbündel der mehreren Lichtquellen (7) einander im bestimmungsgemäß auszuleuchtenden Raumbereich, insbesondere im Fernfeld, im Wesentlichen gleichförmig überlagern und kongruent zueinander ausgebildet sind.

3. Leuchte nach einem der vorhergehenden Ansprüche, wobei die Lichteintrittsflächen derart asymmetrisch ausgebildet sind, dass die von den Lichtquellen (7) abgegebenen Lichtabgabe-Strahlenbündel jeweils asymmetrische Lichtstärkeverteilungen besitzen.

4. Leuchte nach einem der vorhergehenden Ansprüche, wobei die Lichteintrittsflächen (8) und die Lichtaustrittsfläche (5) derart ausgebildet sind, dass die Lichtabgabe-Strahlenbündel der mehreren Lichtquellen (7) einander bereits in der Linse überlagern und von sich überdeckenden Flächenabschnitten der gemeinsamen Lichtaustrittsfläche (5) austreten.

5. Leuchte nach einem der vorhergehenden Ansprüche, wobei die Lichtaustrittsfläche (5) aus einer kontinuierlich konvexen Wölbung frei von konkaven Flächenabschnitten besteht.

6. Leuchte nach einem der vorhergehenden Ansprüche, wobei die Lichtaustrittsfläche (5) ellipsoid ausgebildet ist, wobei vorzugsweise eine kurze Hauptachse (10) des Ellipsoids senkrecht zu einer Linsenbasisfläche (6), in der die Lichteintrittsflächen (8) ausgebildet sind, und eine lange Hauptachse (12) parallel zur genannten Linsenbasisfläche (6) ausgerichtet sind.

7. Leuchte nach einem der vorhergehenden Ansprüche, wobei die Lichtaustrittsfläche (5) einen höchsten Flächenpunkt (11) besitzt, in dem eine Höhe der Linse (4) über einer Linsenbasisfläche (6), in der die Lichteintrittsflächen (6) ausgebildet sind, einen Maximalwert annimmt, wobei der genannte höchste Flächenpunkt (11) mittig auf einer Hauptachse (10) der Lichtaustrittsfläche (5) liegt, welche Hauptachse (10) von der Schnittgeraden zweier Symmetrieebenen der Lichtaustrittsfläche (5) gebildet ist.

8. Leuchte nach einem der vorhergehenden Ansprüche, wobei die jeweils asymmetrischen Lichteintrittsflächen (5) bezüglich einer Hauptachse (10) und/oder bezüglich einer Symmetrieebene der Lichtaustrittsfläche (5) symmetrisch angeordnet sind.

9. Leuchte nach einem der vorhergehenden Ansprüche, wobei mehrere Linsen (4) vorgesehen sind, die vorzugsweise in einer Reihe nebeneinander oder in einer matritzenförmigen Anordnung voneinander beabstandet angeordnet sind.

10. Leuchte nach dem vorhergehenden Anspruch, wobei die mehreren Linsen (4) zueinander identische Lichtaustrittsflächen (5) besitzen, jedoch voneinander abweichend konturierte Lichteintrittsflächen (8) besitzen.

11. Leuchte nach einem der vorhergehenden Ansprüche, wobei die einer gemeinsamen Linse (4) zugeordneten Lichtquellen (7) Licht mit unterschiedlicher Farbtemperatur und/oder mit unterschiedlichem Spektrum abgeben.

12. Leuchte nach dem vorhergehenden Anspruch, wobei einer Linse (4) zumindest eine Lichtquelle mit Licht zur Tagesbeleuchtung und zumindest eine Lichtquelle mit Licht zur Abendbeleuchtung, insbesondere Melatoninlicht, zugeordnet ist.

13. Leuchte nach einem der vorhergehenden Ansprüche, wobei die Leuchte als Straßen- oder Außenleuchte ausgebildet ist und die von der Linse (4) geformten Lichtabgabestrahlenbündel in dem Raumbereich von 0 m bis 2 m über der Bodenoberfläche zueinander im Wesentlichen identische Lichtverteilungen besitzen.

14. Verwendung der Leuchte nach einem der vorhergehenden Ansprüche als Außen- und/oder Straßenleuchte.

15. Verwendung der Leuchte nach einem der vorhergehenden Ansprüche als Innenraumleuchte.
